# EUROPEAN PATENT APPLICATION

(11) **EP 4 366 155 A1**
(43) Date of publication of application: **08.05.2024**
(21) Application number: 23199311.4
(22) Date of filing: 25.09.2023
(51) Int. Cl.: H02P 25/18

(54) **ELECTRIC MOTOR ENABLING SPEED CHANGE AND EFFICIENT RANGE CHANGE ACCORDINGLY**

(30) Priority: 07.11.2022 KR 20220147124
(71) Applicant: Lucent Korea Co., Ltd., Incheon Incheon 22101 (KR)
(72) Inventor: SUNG, Sang Jun, 22692 Incheon (KR)
(74) Representative: M. Zardi & Co S.A.

(57) **Abstract**

The present invention provides an electric motor that enables rotation speed change according to the impedance change by series-parallel and star-delta connection of the stator windings, and enables maximum efficiency change accordingly.

## Description

### [TECHNICAL FIELD]

The present invention relates to an electric motor and a control method thereof.

### [BACKGROUND ART]

Generally, an electric motor has maximum efficiency at a specific speed. The manufactured electric motor requires a change in the maximum efficiency range according to the speed. This is determined at the time of design as an inherent property of the motor. However, in the case of an electric vehicle, for example, it is operated from a stop to the maximum speed range, which has no choice but to operate in the low efficiency range, and thus reduces the efficiency. Further, in order to rotate the electric motor at high speed, the applied voltage must be higher than the counter electromotive force. When the applied voltage is increased, there is a risk of electric shock, and a separate voltage boosting device is required. Therefore, the costs increase, and the efficiency of the voltage boosting device is not 100%, so that the overall efficiency is reduced. Further, a field weakening control method is also used to reduce the counter electromotive force, but this further reduces the efficiency.

Therefore, there is a need to change the maximum efficiency range according to the speed of the currently manufactured electric motor. For example, in the case of an electric vehicle, it consists of one electric motor and a speed reducer. The operation of an electric vehicle from low speed to high speed is based on one motor characteristic, and maximum efficiency can be achieved only at a specific speed of the electric vehicle. Efficiency decreases when operating at speeds other than the maximum efficiency, and electric vehicles mounting with limited batteries have a problem that the mileage inevitably decreases.

Further, even in fields where electric motors are applied in various fields, power efficiency is reduced when the rotational speed varies greatly during motor operation. When a generator is used in automobiles or wind power generation, the speed changes, which is the reason why the generator cannot operate in the maximum efficiency range. Moreover, the generated voltage is converted to a constant voltage and stored in a battery, wherein a voltage adjustment circuit by switching is used, but due to the characteristics of the generator, the power is cut off when the PWM switch is turned off, but the generator continues to rotate. At this time, the power cannot be used, which results in a decrease in efficiency.

Therefore, a separate electrical system is required so as to reach the maximum efficiency according to the rotation speed such as low speed, medium speed, and high speed. It is possible to mount a mechanical transmission on the electric motor and operate it in the maximum efficiency range by shifting according to the speed, but this causes problems of cost increase, failure, volume and weight.

As a prior art literature, Korean Patent No. 10-0598445 discloses a parallel winding type brushless DC motor, which is configured to further install an auxiliary winding connected in parallel with the main winding in the free space of each tooth portion of the slot stator, apart from the conventional main winding wound on the slot stator, and to achieve high-speed operation by using both the main winding and auxiliary winding in the starting section and using only the main winding in the steady-speed section and using only the main winding in the steady-speed section.

Also, Korean Patent No. 10-0132904 discloses a driving control method for an induction motor capable of generating constant output over a wide range of rotation, wherein the winding of the Y-connected induction motor is divided into two by a predetermined ratio of the number of windings, only the changeover switch is operated at low speed using two divided windings, a current flows through the divided winding, and only other changeover switches are operated at high speed, and a current flows only to the other branch winding.

In addition, Japanese Unexamined Patent Publication No. 2016-086587 discloses that when changing the speed by changing the series, parallel, star, and delta connections in the electric motor, a reserve load is provided to prevent transient current due to shift shock.

However, the prevention of shift shock by the reserve load is insufficient, and an instantaneous transient current flows, and unnecessary current is wasted. The reserve loads Z1, Z2 and Z3 are switched when star-delta connection is converted into the combination of R, L and C, and are used for the purpose of preventing such a large transient current. Therefore, current continues to flow in the reserve load when the switch is switched, which is a wasted current that cannot be used to rotate the electric motor at all, and is used only for the purpose of mitigating transient current. Therefore, there is a problem that it reduces the overall efficiency of the electric motor and increases the costs. Further, since it is connected in parallel with the load of the winding, it actually produces a larger transient current than the current of the winding, so it can be seen that the transient current suppression effect is insufficient.

In order to solve such problems, the present invention removes the reserve loads Z1, Z2 and Z3, and uses a double star connection switch, a delta connection switch, and a switch operation method. According to this invention, a pair of star and delta switches are turned ON and OFF sequentially one by one with a time difference to suppress transient current, and all the current is used to rotate the electric motor, so there is no waste of power supply, the efficiency is increased, and costs are reduced. For example, when the switch switching time is increased to suppress instantaneous transient current, Japanese Unexamined Patent Publication No. 2016-086587 wastes power in the reserve loads Z 1, Z2 and Z3, but in the present invention, one of the pair of the star connection switch and the delta connection switch operates, current flows through the winding and is used as a power source for rotating the motor, so that the power is not wasted. Further, in terms of the cost of switching elements, the cost of two low-current switches is lower than the cost of one high-current switch, and there is no separate reserve load, thereby realizing the effect of cost reduction and efficiency increase.

Further, in the present invention, the neutral points of the windings are separated during star connection. Neutral point separation is a basic common sense that is absolutely necessary to improve efficiency and prevent disharmony during operation of double stator motors and parallel operation of motors. This has the effect of improving efficiency by preventing unbalanced rotating magnetic fields in each winding.

Therefore, in conclusion, the present invention is a more advanced technology which has no current of the reserve loads Z1, Z2 and Z3 and no neutral point potential difference current of each winding, reducing unnecessary power waste, increasing efficiency, reducing costs, and having no transient current. In addition, the present invention has an advantage that operation is possible even if one of the pair of star delta switches is damaged.

### [DETAILED DESCRIPTION OF THE INVENTION]

### [Technical Problem]

Therefore, an object of the present invention is to provide a method and structure that can increase efficiency through speed change and operation in the maximum efficiency range only by operating an electrical switch without a mechanical operating structure in an electric motor.

### [Technical Solution]

In order to achieve the above object, provided herein is an electric motor in which three-phase control electric motor windings are connected through series, parallel, star, and delta connections to change speed and efficiency range, characterized in that during star connection, delta connection switches 7a, 7b and 7c are opened, one phase of the winding is always short-circuited to a neutral point without a switch, and two phases are short-circuited by two star connection switches 8a and 8c and star-connected, during delta connection, two star connection switches 8a and 8c are opened, and delta connection switches 7a, 7b and 7c are short-circuited and delta-connected.

Also provided herein is an electric motor enabling speed change and efficiency range change, and a control method thereof, charactered in that in in a six-phase control electric motor, the windings are connected in series and parallel by three parallel switches 66a', 66b' and 66c' and three series switches 65a, 65a and 65a, during series connection, power is supplied to only 3 phases of an inverter 1, during parallel connection, power is supplied to 6 phases, during star connection, one phase is short-circuited to a neutral point without a switch, and two phases are short-circuited and star-connected by two star connection switches 68a' and 68c, the star connection switches 68a' and 68c are opened during delta connection, and three delta connection switches 67a', 67b' and 67c' are short-circuited and delta-connected.

Further provided herein is an electric motor in which double stator elective motor windings are connected in series, parallel, star, and delta to enable speed change and efficiency range change, charactered in that during star connection, delta connection switches 7a, 7b and 7c are opened and one phase of the winding is always short-circuited to a neutral point without a switch, two phases are short-circuited and star-connected by two star connection switches 8a and 8c, and during delta connection, two star connection switches 8a and 8c are opened, and the delta connection switches 7a, 7b and 7c are short-circuited and delta-connected.

Further provided herein is an electric motor capable of changing speed and increasing efficiency accordingly in a three-phase control electric motor, and a control method thereof, charactered in that a series-parallel connection is performed by three parallel switches 16a, 16b and 16c and three series switches 15a, 15b, and 15c, a star-delta connection is performed by 4 star connection switches 18a, 18a', 18c and 18c' and 6 delta connection switches 17a, 17a', 17b, 17b', 17c and 17c', one phase of a first stator winding 13a and a second stator winding 13a' is always short-circuited to each neutral point without a switch, and short-circuited to each neutral point by four star connection switches 18a, 18a', 18c and 18c' and star-connected, wherein the midpoint of the first stator winding 13a and the second stator winding 13a' is separated, and a delta connection is performed by six delta-connected switches 17a, 17a', 17b, 17b', 17c and 17c' and sequentially switched with a time difference, thereby preventing transient current without a reserve load.

Further provided herein is an electric motor capable of changing speed and increasing efficiency accordingly in a six-phase control electric motor, and a control method thereof, characterized in that a series connection is performed only with three series switches 25a, 25b, and 25c and three-phase A, B, and C power supply of an inverter 1 without a separate parallel switch, during parallel connection, series switches 25a, 25b, and 25c are opened, and a parallel connection is performed with a power through the 6-phase A, B, C, A', B' and C' power supply of the inverter,

one phase of a first stator winding 23a and a second stator winding 23a' is always short-circuited to each neutral point without a switch during star-delta connection through 4 star connection switches 28a, 28a', 28c and 28c' and 6 delta connection switches 27a, 27a', 27b, 27b', 27c and 27c', and short-circuited to each neutral point through four star connection switches 28a, 28c, 28a' and 28c' and star-connected, wherein the midpoint of the first stator winding 23a and the second stator winding 23a' is separated, six delta connection switches 27a, 27b, 27c, 27a', 27b' and 27c' are short-circuited and delta-connected, and during switching, they are switched sequentially with a time difference, thereby preventing transient current without a reserve load.

Further provided herein is an electric motor capable of changing speed and increasing efficiency accordingly in a six-phase control electric motor, and a control method thereof, characterized in that there is no separate parallel switch and series switch in the winding, a pair of three phases are connected in parallel or mutually connected in series to a power source by a power switch 30, a ground switch 30' and a coupling switch 31, and star connection switches 38a, 38c, 38a' and 38c' and delta connection switches 37a, 37b, 37c, 37a', 37b' and 37c' are converted so that the windings are mutually connected through star-serial-star connection, star-parallel-star connection, delta-series-delta connection, and delta-parallel-delta connection.

Further provided herein is a method for operating a switch to prevent controller damage and shutdown due to transient current in the electric motor, the method comprising:
a step in which during star-parallel-star connection, a coupling switch 31 opens delta connection switches 37a, 37b, 37c, 37a', 37b' and 37c' in the open state, and star connection switches 38a, 38c, 38a' and 38c' are short-circuited, and then power switches 30 and 30' are short circuited after a predetermined time delay; and
a step in which during delta-parallel-delta connection, the coupling switch 31 opens the star connection switches 38a, 38c, 38a' and 38c' in the open state, the delta connection switches 37a, 37b, 37c, 37a', 37b' and 37c' are short-circuited, and then the power switches 30 and 30' are short-circuited after a predetermined time delay.

Further provided herein is an electric motor in which three-phase control electric motor windings are connected through series, parallel, star, and delta connections, characterized in that during star connection, one phase of the winding is always short circuited to a neutral point without a switch, and two phases are short-circuited and star connected by two star connection switches 8a and 8c.

Further provided herein is an electric motor in which six-phase control electric motor windings are connected through series, parallel, star and delta connections, characterized in that during series connection, power is supplied only to three phases A, B and C of an inverter 1, during parallel connection, power is supplied to 6 phases A, B, C, A, B' and C', during star connection, one phase is short-circuited to a neutral point without a switch, and the two phases are short-circuited and star-connected by two star connection switches 68a' and 68c.

Further provided herein is an electric motor in which three-phase control electric motor windings are connected through series, parallel, star and delta connections, characterized in that during star connection, one phase of each end of a first stator winding 13a and a second stator winding 13a' is always short-circuited to each neutral point without a switch, and short-circuited to each neutral point by four star connection switches 18a, 18a', 18c and 18c' and star-connected, and the midpoints of the first stator winding 13a and the second stator winding 13a' are separated and switched sequentially with a time difference.

Further provided herein is an electric motor in which three-phase control electric motor windings are connected through series, parallel, star and delta connections, characterized in that a series connection is performed only by series switches 25a, 25b and 25c and three-phase A, B and C power supply of an inverter 1, a parallel connection is performed with power by 6-phase A, B, C, A', B' and C' power supply of the inverter 1, during star connection, one phase of a first stator winding 23a and a second stator winding 23a' is always short-circuited to each neutral point without a switch, and four star connection switches 28a, 28c, 28a' and 28c' is sequentially short-circuited to each neutral point to make a neutral point separation and star-connection.

Further provided herein is an electric motor in which six-phase control electric motor windings are connected through series, parallel, star and delta connections, characterized in that during delta connection, a parallel connection is performed by a power switch 30 and a ground switch 30', and a series connection is performed by a coupling switch 31.

Further provided herein is a method for operating a switch to prevent controller damage and shutdown due to transient current in the electric motor, the method comprising a step of switching star connection switches 18a and 18c and star connection switches 18a' and 18c' between ON and OFF step by step during parallel-star connection.

### [Advantageous Effects]

The present invention exhibits the effect that can increase the speed bandwidth of the electric motor, can operate in the maximum efficiency range according to the speed from low speed to high speed to increase the overall operation efficiency, and does not require a high voltage for high speed rotation, thereby improving safety and efficiency. Also, the number of control switches is designed to the minimum, thereby achieving effects such as cost reduction, durability increase, and efficiency improvement.

By operating a generator in the maximum efficiency range, the overall operating efficiency of the generator can be improved through electrical speed change according to the speed.

Generally, in the case of an electric vehicle, a generator is provided separately from a driving motor during regenerative braking, which is because operation efficiency is low. However, according to the present invention, the permanent magnet rotor motor can be operated as an optimal generator by changing the winding according to the speed, so that the driving motor can be used as an efficient generator by switching without a separate generator, thereby exhibiting the effect of reducing costs and weight, and saving space.

### [BRIEF DESCRIPTION OF THE DRAWINGS]

FIG. 1 is a three-phase controlled series-parallel, star-delta conversion electronic circuit diagram according to an embodiment of the present invention.
FIG. 2 is a six-phase controlled series-parallel, star-delta conversion electronic circuit diagram according to an embodiment of the present invention.
FIG. 3 is a three-phase controlled series-parallel, neutral point separated star-delta conversion electronic circuit diagram according to an embodiment of the present invention.
FIG. 4 is a six-phase controlled series-parallel, neutral point-separated star-delta conversion electronic circuit diagram according to an embodiment of the present invention.
FIG. 5 is a six-phase controlled star-delta conversion electronic circuit diagram according to an embodiment of the present invention.
FIG. 6 is a program flow chart according to an embodiment of the present invention.

### [DETAILED DESCRIPTION OF THE EMBODIMENTS]

In order to enable the speed change of the electric motor and the maximum efficiency range change accordingly, there is a winding impedance conversion method by a combination of series-parallel connection and star-delta connection. Such a method can be widely used for induction motors as well as permanent magnet BLDC motors.

The earlier filed Korean patent application No. 10-2021-0128038, entitled 'An electric motor or generator enabling speed change and efficiency range change accordingly' explains the speed change and efficiency change by combination of series, parallel, star, and delta.

Also, the earlier filed Korean patent applications No. 10-2016-0031422, and No. 10-2017-0147256, disclose a method of operating a double stator electric motor with a motor structure in which a rotor 3 is operated by a first stator winding 1 and a second stator winding 2, wherein two windings of each phase of the first stator winding 1 and the second stator winding 2 are combined in series, parallel, star, and delta to change the impedance and change the speed. Although the type of the double stator electric motor is not shown, it is the same as a radial flux motor and an axial flux motor.

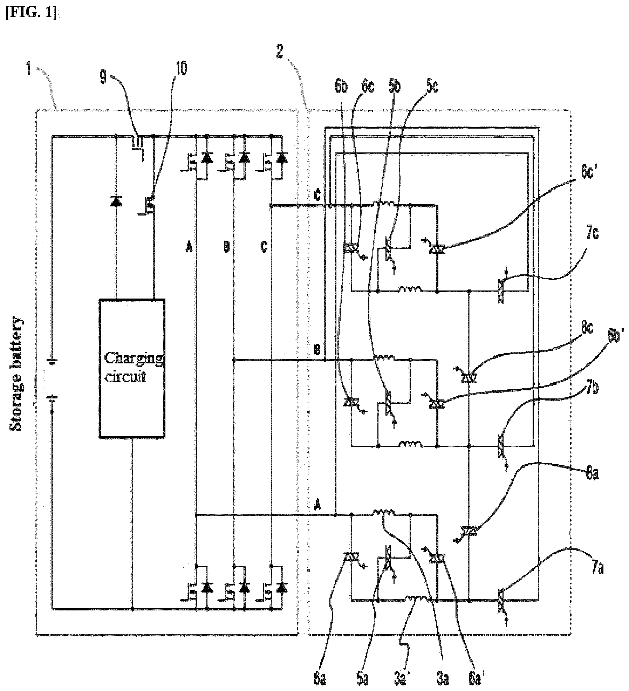

FIG. 1 is a three phase controlled series-parallel, star-delta conversion electronic circuit diagram according to an embodiment of the present invention. FIG. 1 is a basic electronic circuit diagram for this purpose, wherein a first stator winding 3a and a second stator winding 3a' may be connected in series and parallel by parallel switches 6a, 6a', 6b, 6b', 6c and 6c' and series switches 5a, 5b and 5c, and star-delta connection is performed by star connection switches 8a and 8c and delta connection switches 7a, 7b and 7c, so that four types of speed changes such as series-star connection, parallel-star connection, series-delta connection, and parallel-delta connection are possible, and the maximum efficiency range can be changed accordingly.

A detailed operation method will be described with reference to the accompanying drawings. First, in the case of series-star connection, parallel switches 6a, 6a', 6b, 6b', 6c and 6c' are opened, a second stator winding 3a' is open-circuited from the power supply, and the series switch 5a, 5b and 5c is short-circuited so that the first stator winding 3a and the second stator winding 3a' are connected in series. At this time, star connection switches 8a and 8c and delta connection switches 7a, 7b and 7c must be opened, and then star connection switches 8a and 8c is short-circuited to a neutral point to enter the star connection state. Although the phase A has been described above, the phase B and the phase C operate similarly. With such a switch operation, the first stator winding and the second stator winding can be operated in series-star connection.

Here, the difference from the series, parallel, star, and delta connections of the earlier filed applications is that during conventional star connection, three phases are short-circuited to a neutral point by a combination of three bidirectional switches or six unidirectional switches. However, the present invention has the feature that one of the three phases is always short-circuited to a neutral point, and a star connection may be performed by operating only two bidirectional switches or four unidirectional switches. This reduces the number of switches, simplifies the structure, and has advantages in price and maintenance.

Next, the series-delta connection will be described. Parallel switches 6a, 6a', 6b, 6b', 6c and 6c' are opened, and series switches 5a, 5b and 5c are short-circuited and connected in series. The star connection switches 8a, 8c and the delta connection switches 7a, 7b, 7c are opened, and then the delta connection switch 7a, 7b and 7c is short-circuited, so that the phase A is connected to the power of phase B, phase B is connected to the power of phase C, and phase C is connected to the power of phase A, thereby making a delta connection.

Next, the parallel-star connection will be described. The parallel switches 6a, 6a', 6b, 6b', 6c and 6c' are short-circuited and the series switches 5a, 5b, 5c are opened to connect the windings in parallel. The star connection switches 8a and 8c are also short-circuited, and each phase of the first stator winding 3a and the second stator winding 3a' is short-circuited to a neutral point and connected by parallel-star.

Finally, in the parallel-delta connection, series switches 5a, 5b and 5c are opened, parallel switches 6a, 6a', 6b, 6b', 6c and 6c' are short-circuited, and star connection switches 8a and 8c are opened, and delta connection switches 7a, 7b and 7c are short-circuited and connected by parallel-delta.

As a result, a star connection can be performed with only two bidirectional switches, which is a smaller number than conventional switches, thereby providing an electric motor whose speed can be changed and efficiency can be changed accordingly.

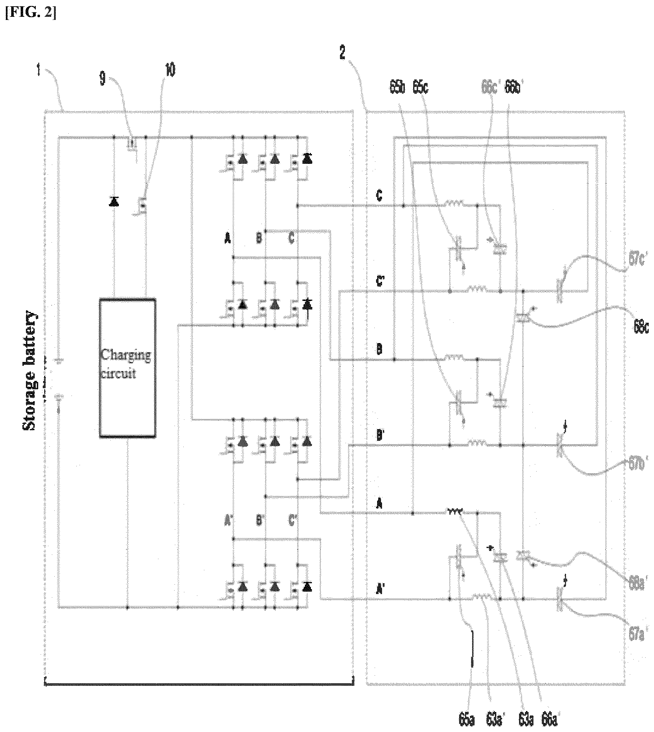

FIG. 2 is a 6-phase controlled serial/parallel, star-delta conversion electronic circuit diagram according to an embodiment of the present invention. FIG. 2 provides series, parallel, star and delta connections of windings by a 6-phase inverter as another embodiment of the present invention, and the difference from the three-phase inverter control of FIG. 1 is that only three parallel switches and two star connection switches are required. Therefore, with such a control circuit, the same performance can be exhibited while reducing the number of parallel switches and star-connected switches as compared to the conventional case, thereby having a simple structure and advantageous effects in terms of cost reduction and maintenance.

According to the embodiment, for example, during series-star connection, parallel switches 66a', 66b', and 66c' are opened, series switches 65a, 65b and 65c are short-circuited and connected in series, and delta connection switches 67a', 67b' and 67c' are opened, and star connection switches 68a' and 68c are short-circuited and star-connected. At this time, power sources A', B' and C' inside the inverter 1 are cut off. Therefore, series-star connection is performed by using only 3 phases among the 6 phases of the inverter 1. At this time, the switches of the three-phase A', B' and C' inside the inverter 1 to which power source is not applied are all opened.

As another example, the parallel-delta connection is described. The parallel switches 66a', 66b' and 66c' are short-circuited, and the series switches 65a, 65b and 65c are opened and connected in parallel, and the delta connection switches 67a', 67b' and 67c' are short-circuited, and the star connection switches 68a' and 68c' are opened and delta-connected. Therefore, at the end of each winding, the phase A is connected to the power source of phase B, the phase B is connected to the power source of phase C, and phase C is connected to the power source of phase A.

At this time, all six-phase power source inside the inverter 1 is operated, and the power source is supplied to parallel. Since the power source control inside the inverter 1 can be easily turned ON and OFF by a program without an additional switch, parallel switches can be reduced by utilizing this, and loss due to wire resistance can be reduced by supplying power in parallel.

In addition, since the series-delta and parallel-star connections are the same as the above combination, the explanation thereof will be omitted.

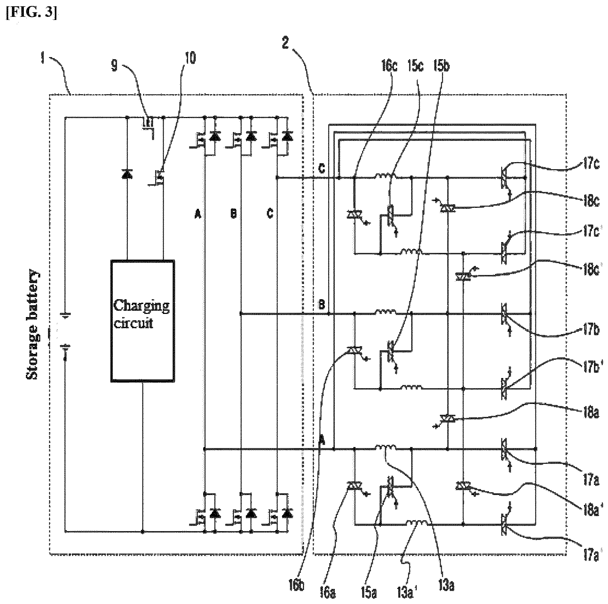

FIG. 3 is a three-phase controlled series-parallel, neutral point-separated star-delta conversion electronic circuit diagram according to an embodiment of the present invention. FIG. 3 is a control circuit diagram improved from FIG. 1, wherein the neutral point is separated during parallel-star connection, and it exhibits a transient current suppression effect due to a pair of switching time difference. In FIG. 1, a parallel circuit can be configured with 6 parallel switches, whereas in FIG. 3, a parallel circuit can be configured with three parallel switches, neutral points of the first stator winding and the second stator winding are separated during star connection to increase efficiency, and power can be sequentially applied to the first stator winding and the second stator winding, thereby being excellent in the transient current suppression effect. Therefore, the transient current can be suppressed without a separate reserve load. In addition, in the present invention, the number of the conventional 6 bidirectional switches are reduced to 4 bidirectional switches during star connection.

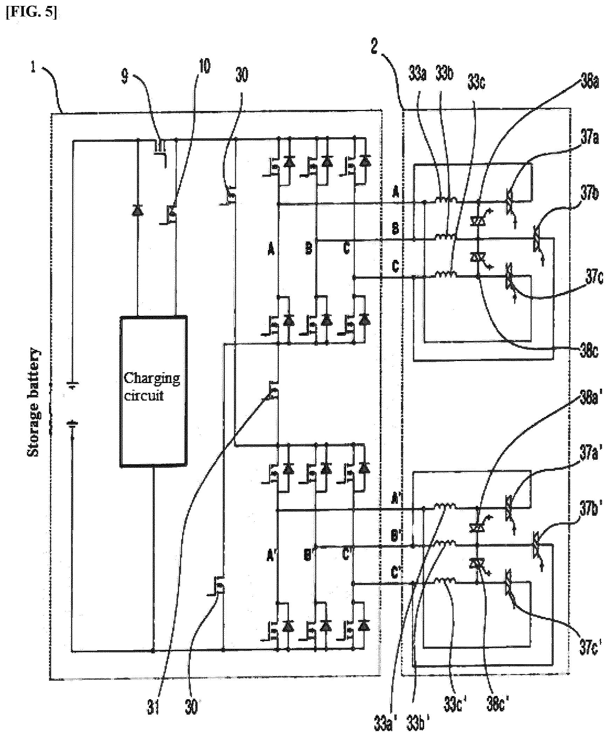

In FIG. 5 of the earlier filed Korean Patent Application No. 10-2021-0128038, entitled 'Electric motor or generator enabling speed change and efficiency range change accordingly', a total of 6 bidirectional switches are used during star connection. However, in the present invention, one of the three phases is always short-circuited to a neutral point without a switch, and only two phases are switched to enable star connection. Therefore, the number of switches can be reduced and the same effect can be obtained, resulting in cost reduction effect.

By way of example, during parallel-star connection, the series switches 15a, 15b and 15c are opened, and the parallel switches 16a, 16b and 16c are short-circuited, so that the first stator winding 13a and the second stator winding 13 a' is connected in parallel, the star connection switches 18a, 18c, 18a' and 18c' are short-circuited, and the delta connection switches 17a, 17b, 17c, 17a', 17b' and 17c' are opened, so that the winding ends of each phase are short-circuited to a neutral point, and star-connected. At this time, one of the three phases of the first stator winding 13a and the second stator winding 13a' is always short-circuited to the neutral point without a switch, and the neutral points are separated from each other. Therefore, while the prior art invention required 6 star connected switches, the present invention requires only 4 star switches and has the same performance. Further, by separating the neutral points of the first stator winding 13a and the second stator winding 13a' from each other, they operate independently to prevent the flow of current due to the neutral point potential difference. This cannot realistically be wound so that the three-phase balance of each phase is achieved, and accordingly, a minute potential difference is generated and current flows, which reduces efficiency and is a mismatch issue, so that this is to be compensated for. Even in the switching time, a transient current can be suppressed by delaying the power supply times of the first stator winding 13a and the second stator winding 13a' and sequentially supplying power.

Even in parallel-delta connection, the delta connection switches 17a, 17b, 17c, 17a', 17b' and 17c' of the first stator winding 13a and the second stator winding 13a' are switched with a time difference, thereby suppressing the transient current.

In the series-star or series-delta connection, the series switches 15a, 15b and 15c are short-circuited, the parallel switches 16a, 16b and 16c are opened, and the star connection switches 18a' and 18c' at the end of the second stator winding 13a' are short-circuited, or the delta connection switches 17a', 17b' and 17c' are short-circuited and connected.

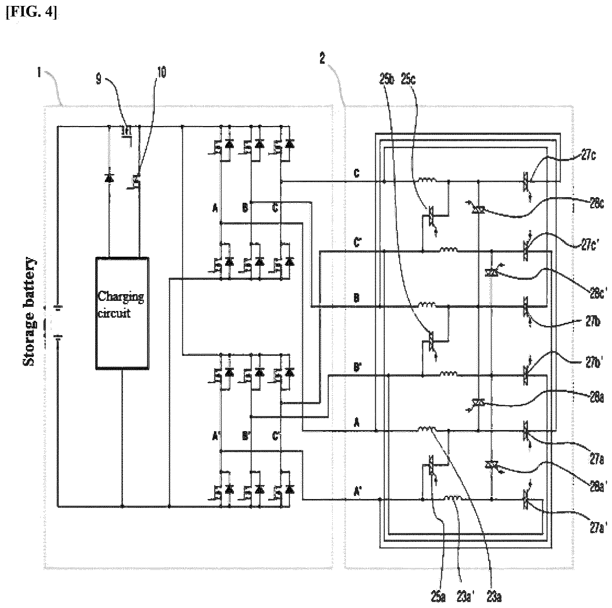

FIG. 4 is a six-phase controlled series-parallel, neutral point-separated star-delta conversion electronic circuit diagram according to an embodiment of the present invention. FIG. 4 is an electronic control circuit diagram improved from FIG. 2, wherein there is no parallel switch at all due to 6-phase control, but it can be operated in parallel, and the neutral point is separated during parallel-star connection, and exhibit a transient current suppression effect due to a pair of switching time differences.

For example, when each winding is connected in series, the series switches 25a, 25b, and 25c are short-circuited, and power is applied to only three phases A, B, and C of the six phases of power inside the inverter 1, and no power is applied to A', B', C'. Therefore, each winding is connected in series with three phases. Conversely, during parallel connection, power is applied to all six-phase power sources A, B, C and A', B', C', and the series switches 25a, 25b, and 25c are opened to supply power in parallel. Accordingly, there is no parallel switch at all, but the overall power supply is the same as in parallel connection.

In addition, for other star-delta conversion connections, there are performed by operating the star connection switches 28a, 28c, 28a' and 28c' and the delta connection switches 27a, 27b, 27c, 27a', 27b' and 27c', which can be converted to 4 star-connected switches similar to FIG. 3. However, since there are 6 phases in delta connection, it is assumed that the first stator winding 23a and the second stator winding 23a' are different in three-phase delta-connected portions.

For example, during series-star connection, power is supplied only to power sources A, B, and C inside the inverter 1, and power is not supplied to A', B', and C', and all switches are opened. Further, the series switches 25a, 25b and 25c are in a short-circuiting state, the star connection switches 28a' and 28c' are also in a short-circuiting state, and the delta connection switches 27a, 27b, 27c, 27a', 27b' and 27c' are in an opened state. Therefore, the first stator winding 23a and the second stator winding 23a' operate in a series-star connection state.

The star connection is short-circuited at each end of each phase, requiring only a total of four switches, the neutral point is separated, and is improved over the prior art in terms of cost and efficiency.

During parallel-delta connection, power is supplied to all 6 phases A, B, C and A', B', C' of the inverter 1, and the series switches 25a, 25b, 25c and the star connection switches 28a, 28c, 28a' and 28c' are opened, and the delta connection switches 27a, 27b, 27c and 27a', 27b', 27c' are short-circuited, so that at the ends of each winding, phase A is short-circuited to phase B, phase B to phase C, phase C to phase A, phase A' to phase B', phase B' to phase C', phase C' to phase A', and connected by parallel-delta.

Thereby, serial-parallel conversion can be performed only with the 6-phase control of the inverter 1 and the series switches 25a, 25b and 25c without an additional parallel switch, a star connection with separated neutral point can be performed with only four switches, and switching can be performed in stages, which is an advanced technology that brings effects such as transient current suppression, cost reduction, durability improvement, and efficiency increase.

Other connection can be performed with the above combination, and so the explanation will be omitted.

FIG. 5 is a 6-phase controlled star-delta conversion electronic circuit diagram according to an embodiment of the present invention. In FIG. 5, there is no series switch and parallel switch in the winding, and a power switch 30, a ground switch 30', and a coupling switch 31 inside the inverter 1 allow star-serial-star connection, star-parallel-star connection, delta-series-delta connection and delta-parallel-delta connection. In other words, the invention can produce such an effect without a series switch and a parallel switch.

To explain the operation principle, the first stator windings 33a, 33b and 33c and the second stator windings 33a', 33b' and 33c' are independently configured on three phases of the six phases of the inverter 1, and thus are independently connected by star-delta. This is again connected to the power supply and parallel connection or three-phase series coupling by the power switch 30, the ground switch 30', and the coupling switch 31 inside the inverter. Therefore, as compared to the prior art invention, the series and parallel switches are eliminated, and thus the circuit is simplified, which can be said to be an advanced technology that brings about cost reduction, durability, and efficiency enhancement effects.

As a specific example, first, in the case of star-series-star connection, the star connection switches 38a, 38c, 38a' and 38c' are short-circuited to each neutral point, and the delta connection switches 37a, 37b, 37c, 37a', 37b' and 37c' are opened. The power switch 30 and the ground switch 30' inside the inverter 1 are opened, the coupling switch 31 is short-circuited, so that each of the three phases is connected in series with the power supply. Overall, the circuit is connected in a star-series-star fashion to supply power, which has an impedance similar to that of a series-star connection and also produces similar rotational speeds.

As another example, the delta-parallel-delta connection is described. The star connection switches 38a, 38c, 38a' and 38c' of each winding are opened, and the delta connection switches 37a, 37b, 37c, 37a', 37b' and 37c' are short-circuited to form a delta connection, and the power switch 30 and the ground switch 30' are short-circuited, so that power is supplied in parallel, and the coupling switch 31 is opened. Therefore, the overall circuit is composed of a delta-parallel-delta circuit, which has similar impedance and rotational speed to the parallel-delta circuit. This invention has the effect of configuring a circuit in series and parallel without an additional series switch or parallel switch, and thus, it is an advanced technology with obvious effects such as cost reduction and efficiency increase. Conventionally, about nine bidirectional switches for serial-parallel conversion were required, but in the present invention, such switches are not required at all, but only three unidirectional switches are required inside the inverter 1.

Other connect methods are omitted because only switching is changed in the above combination, and capacitors may be provided in parallel on the power supply side of each of the three phase A, B, C, and A', B', C' of the inverter 1.

The connection method of the structure shown in FIG. 5 has a problem that it cannot be connected in series in the prior art when the rotational speeds are different from each other in parallel operation of permanent magnet motors, but the present invention has the effect of enabling series connection due to independent phase control by different sensor signals. For example, when the left and right wheels of an electric vehicle are driven by dual motors, the left and right wheel motors when the vehicle turns a corner cannot but rotate at different speeds. If two motors are connected in series, they are damaged by the speed difference in the past, making operation impossible. However, with the electronic circuit shown in FIG. 5, the two motors are supplied with independent three-phase power sources by independent sensor signals so that they can be operated by the series connection effect.

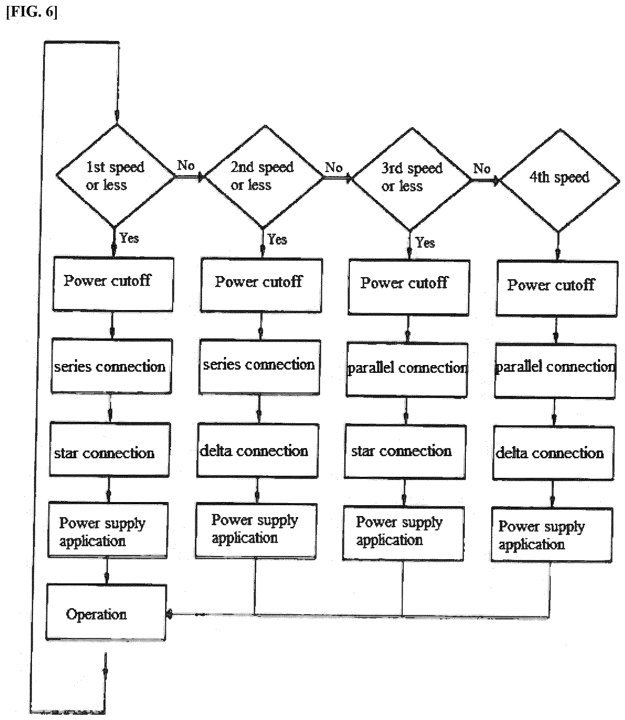

FIG. 6 is a program flow chart according to an embodiment of the present invention. Thereby, the microprocessor can appropriately connect the series-parallel and star-delta connections according to the speed, thereby allowing for speed changes and thus operation in the maximum efficiency range.

The above connection method has been described as a double stator type electric motor in which the number of windings in each phase is an even number or two stators in a single stator, but by applying this to a generator and changing the connection according to the rotation speed of the generator, it is possible to operate near the maximum efficiency of the generator. When operating as a generator, the series-parallel and star-delta connections are the same as those of the electric motor, depending on the speed, and the battery is charged by the operation of the charging switch 10.

In addition, in the winding of a single stator motor, when the slot or teeth of each phase is an even number, it can be divided in half and connected in series, parallel, star, delta with the first stator winding and the second stator winding, and the teeth is an odd number even if it is a double, it is also possible to wind the winding of each phase into a plurality of twisted wires at an even number of times, and divide it in half for use.

## Claims

1. An electric motor in which three-phase control electric motor windings are connected through series, parallel, star, and delta connections, **characterized in that**:
one phase of the winding during star connection is always short-circuited to a neutral point without a switch, and
two phases are short-circuited and star-connected by two star connection switches 8a and 8c.

2. An electric motor in which six-phase control electric motor windings are connected through series, parallel, star, and delta connections, **characterized in that**:
during serial connection, power is supplied only to three phases A, B and C of an inverter 1, during parallel connection, power is supplied to 6 phases A, B, C, A, B' and C', during star connection, one phase is short-circuited to a neutral point without a switch, and two phases are short-circuited and star-connected by two star connection switches 68a' and 68c.

3. An electric motor in which double stator electric motor windings are connected through series, parallel, star, and delta connections, **characterized in that**:
one phase of the winding during star connection is always short-circuited to a neutral point without a switch, and
two phases are short-circuited and star-connected by two star connection switches 8a and 8c.

4. An electric motor in which three-phase control electric motor windings are connected through series, parallel, star, and delta connections, **characterized in that**:
during star connection, one phase of each end of a first stator winding 13a and a second stator winding 13a' is always short-circuited to each neutral point without a switch, and short-circuited to each neutral point by four star connection switches 18a, 18a', 18c and 18c' and star-connected, and the neutral points of the first stator winding 13a and the second stator winding 13a' are separated and switched sequentially with a time difference.

5. An electric motor in which six-phase control electric motor windings are connected through series, parallel, star, and delta connections, **characterized in that**:
a series connection is performed only by series switches 25a, 25b and 25c and three-phases A, B, C and power supply of an inverter 1, a parallel connection is performed with power by 6-phases A, B, C, A', B', C' and power supply of the inverter 1, during star connection, one phase of the first stator winding 23a and the second stator winding 23a' is always short-circuited to each neutral point without a switch, and each neutral point is sequentially short-circuited by four star connection switches 28a, 28c, 28a' and 28c' to make neutral point separation and star connection.

6. An electric motor in which six-phase control electric motor windings are connected through series, parallel, star, and delta connections, **characterized in that**:
a parallel connection is performed by a power switch 30 and a ground switch 30', and a series connection is performed by a coupling switch 31.

7. A method for operating a switch in the electric motor according to claims 4 or 5 to prevent controller damage and shutdown due to transient current, the method comprising:
a step of switching star connection switches 18a and 18c and star connection switches 18a' and 18c' between ON and OFF step by step during parallel-star connection.
